# EUROPEAN PATENT SPECIFICATION

(11) **EP 1 896 253 B1**
(45) Date of publication and mention of the grant of the patent: **14.05.2014**
(21) Application number: 05757301.6
(22) Date of filing: 06.06.2005
(51) Int. Cl.: B32B 5/16, C09C 1/36, B01F 9/00, B01F 9/06, B01J 2/12

(54) **METHODS FOR FORMING PIGMENT PSEUDOPARTICLES**
VERFAHREN ZUM BILDEN VON PIGMENT-PSEUDOARTIKELN
PROCEDE DE FORMATION DE PSEUDOPARTICULES DE PIGMENT

(43) Date of publication of application: 12.03.2008
(73) Proprietor: TIOXIDE GROUP SERVICES LIMITED, Billingham Stockton-on-Tees TS23 1PS (GB)
(72) Inventor: BOHACH, William L., Savannah, GA 31411-1324 (US); BOHACH, Christopher S., Savannah, GA 31411-1324 (US)
(74) Representative: Scholz, Volker
(86) International application number: PCT/US2005/019758
(87) International publication number: WO 2006/132628

(56) References cited:
- DE-A1- 19 928 851
- US-A- 3 502 304
- US-A- 3 660 129
- US-A- 3 825 388
- US-A- 4 310 483
- US-A- 5 199 986
- US-A- 6 132 505

## Description

### Background of the Invention

The invention disclosed herein relates generally to an apparatus and method of forming pigment pseudoparticles from pigment particles, as well as the pigment pseudoparticles produced therefrom. More specifically, embodiments of the disclosed invention relate to polarizing pigment particles and agglomerating the polarized pigment particles to form pigment pseudoparticles.

Titanium dioxide pigment particles, iron oxides pigment particles, pearlescent pigment particles, other metal oxide pigment particles, are often used in cosmetics, detergents, paint, plastics, and other products and industries where it is desired to add to the color of the product and/or opacify the desired product. This is usually done through intensive mixing of pigment pellets and/or powder in a liquid medium to be colored. Some desired properties for the pigment pellets are the dispersability of the pigment throughout the application system, ease of bulk handling, ease of metering and the amount of dust tainting the pigment pellet.

To enhance dispersability in a medium to be colored, pigment is often produced in the form of a finely divided powder of preferably inorganic pigment particles. The powders are usually jet-milled, sand milled, hammer milled or roller milled as a finishing step in their production, which contributes to dispersability and gloss. However, milled pigments in the art generally exhibit poor dry flow characteristics and have the great disadvantage of being extremely dusty. During use of these powders, costly measures must be taken to reduce the harmful effects of the dust (e.g. workplace safety, ecological concerns, product quality assurance, etc.), thus consuming valuable time, money and other resources. Furthermore, pellets made from such powders are general difficult to handle, storing, transport and introduce into the manufacturing equipment without the pellets crumbling. Thus, products that have achieved good pigment dispersability often fail to provide good pigment stability and products that have achieved good pigment stability often fail to provide good pigment dispersability.

Processes of the prior attempted to solve some of these problems by using chemical additives. For example, U.S. Patent No. 4,285,984 ("Pearce") discusses a process for production for free flowing dust-free pigments, a process comprising tumbling together a finely divided wax composition a powdered pigment so that the wax absorbs the pigment, and a nucleated pigment comprising a spray-chilled wax composition. Also, U.S. Patent No. 4,375,520 ("Pennie") discusses treatment of particles with a solid low-molecular weight polymer and a liquid polymer substance.

Other problems repeatedly experienced in handling large quantities of powders are caking, rat holing and bridging. The stability of pigment is important for good storage and transporting, and it is desired to avert aging and/or pigment clumping into undesired agglomerates when stored pigment is subjected to heat, humidity and pressure over time. Together with dust-related problems associated with finely divided powders, it is frequently desired that pigment particles are formed into pigment pellets. However, pigment pellets must also be formed so that they are easily dispersible in a medium and so the pellets do not clog feed bines, which causes reduced pigment flow and other problems.

Solutions to some of these problems have been attempted in the prior art. For example, U.S. Patent No. 5,604,279 ("Bernhardt") discusses a colorant composition consisting essentially of a free flow agent with one or more colorants finely dispersed in an amorphous poly-.alpha.-olefin which is composed of at least two different monomers having a butene-1 content of at least 25% by weight. U.S. Patent No. 5,199,986 ("Krockert") discusses a process for coloring building materials with inorganic pigments which comprises incorporating into said materials pigments in the form of granulates which are free-flowing and no dust forming wherein the pigment granulates are produced from spray dried granules by after-granulating.

Dispersability is a measure of the ease with which the pigment can be uniformly and homogenously mixed into a medium, and poor dispersion in the medium can cause large agglomerates that may result in lumps, surface imperfections, color streaks, nonuniform coloration, and/or incomplete color development within the medium. Methods of the prior art have attempted to enhance dispersability or to improve dry flow characteristics by surface treatment of pigments to achieve improved performance characteristics for when the pigment is dispersed in, for example, coatings and/or plastic compositions. For example, U.S. Patent No. 3,925,095 ("Bockmann") discusses a dispersible composition comprising an inorganic pigment or filler and a hydroxyalkylated alkylene diamine, while U.S. Patent No. 4,056,402 ("Guzi") discusses a pigment composition prepared by milling the pigment in water in the presence of a nonionic dispersing agent, mixing the milled pigment dispersion with a cellulose ether, and removing the water from the resulting mixture.

U.S. Patent No. 4,310,483 ("Dorfel") discusses a process for producing a granulate by thermal tumbling granulation utilizing an additive and a granulating auxiliary, and U.S. Patent No. 4,464,203 discusses concentrated pigment formulations containing pigments and ethylene oxide. Pigments have also been treated with waxes, aqueous solutions, polymers, etc. For example, U.S. Patent No. 4,127,421 ("Ferrill") discusses the forming of an aqueous slurry of a lead chromate-containing pigment dispersed in a friable hydrocarbon resin. Also, U.S. Patent No. 4,762,523 discusses mixing a long-chain polyester surfactant produced by condensation and adding an essentially non-volatile liquid selected from the group consisting of mineral oil and molten wax.

Another method for making free-flowing powders with low dust can be obtained by spray drying. These products generally exhibit poor coloring properties and end users have thus generally had to choose between free-flowing, low dusting, spray-dried pigments with poor coloring properties, and dusty, milled pigments with poor flow characteristics For example, U.S. Patent No. 3,660,129 ("Luginsland") discusses coating titanium oxide pigments with hydrous oxides and sanding and drying the pigment. This results in small particle size with a high proportion of fine particles that are not directly usable pellets. Also, this hydrophobic spray-drying post-treatment results in particles that have somewhat good flow properties but produce exceptionally large quantities of dust.

Other Patents relating to spray drying include the Krockert patent discussed above, as well as U.S. Patent No. 4,810,305 ("Braun") and U.S. Patent No. 5,035,748 ("Burrow"), which both discuss the use of organosiloxanes. Furthermore, U.S. Patent No. 5,733,365 ("Halko") discusses the aqueous milling, surface treatment, and spray-drying of inorganic pigments, U.S. Patent No. 6,132,505 discusses spray drying and agglomeration, and U.S. Patent No. 5,908,498 ("Kauffman") discusses forming a dispersed slurry of pigment and water, milling the slurry and depositing a treating agent on the slurried milled pigment.

US 3,825,388 relates to an apparatus for the pelletisation of inorganic pigment in which a vessel having a circular inner surface is rotatable mounted and has at one end an inlet for the pigment to be pelletised and at the other end an outlet for the pellets with at least a portion of the circular inner surface adjacent the outlet end at an angle to the axis of the vessel which is less than the angle of slip of pellets of the pigment on the material of construction of the inner surface.

DE 199 28 851 A1 discloses a granulates based on pyrogenic titanium dioxide which has an average particle diameter of 10-150 microns, a BET surface area of 25-100 m²/g, a pH of 3-6 and a tamped density of 400-1200 g/l, the production of said granulates and their use as catalyst supports and in cosmetics, for sun protection, in silicon rubber, in toner powders, lacquers and paints, as abrasive and polish and as raw materials for glass and ceramics manufacture.

US 3,502,304 relates to an apparatus and a method for producing agglomerates wherein the agglomerates are produced by producing powder into one end of a rotating drum and providing a liquid spray at the one end and thereof which is directed to the bottom of the drum at an inclined angle with respect of the axis of the drum thereby imparting a component of motion to the powder surface in a direction towards the other of the drum through which the resulting agglomerates are withdrawn. The spray may be introduced through jet mixing nozzles, permitting the simultaneous mixing and spraying of two different liquids.

Each of the methods and products of the prior art are deficient in at least one of the characteristics desired of pigment, as the quality of the other characteristics increases. The prior art fails to solve the problem of forming a pigment pellet that simultaneously possesses the qualities of being extremely friable, highly dispersible, smoothly discharging, able to alleviate bridging and rat holing, substantially free of dust, easily metered, highly dense and resistant to compaction.

Pigment particles, such as titanium dioxide for example, generally have detrimental clumping properties due to the high cohesive nature of the pigment, the particles tightly clumping and caking during movement in transit, in storage. In use however, titanium dioxide forms fine powders or dusts which spread in the air, and which further stick to the surrounding areas. Any reduction in dust has serious health benefits and as well as other benefits relating to the concerns of the National Institute of Occupational Safety and Health (NOSH), the Department of Labor and/or the Environmental Protection Agency. There can also be loss of optical properties when these clumps are incorporated into powder coatings and plastics applications.

Overcoming the disadvantages present in the prior art, embodiments of the invention disclosed herein utilize electrostatics to induce an attractive bonding force between the pigment particles. Embodiments of the disclosed invention possess the desired pigmenting characteristics without the inclusion of additives and without dry spraying being required.

### Summary of the Invention

The object of the present invention is solved by a method according to claim 1 and an apparatus according to claim 4. Preferred embodiments may arise from the subclaims.

Disclosed herein is a method of forming pigment pseudoparticles from titanium dioxide particles, comprising: providing a hollow vessel having an inner cylindrical surface and containing pigment particles; providing a plurality of paddles that extend inwardly from the inner cylindrical surface; passing a flow of gas through the inner cylindrical surface; axially rotating the inner cylindrical surface, thereby causing the plurality of paddles to lift a portion of the pigment particles; axially rotating the inner cylindrical surface, thereby causing the plurality of paddles to dispense the pigment particles of the dispensed portion being polarized by the gas and landing onto a pile of the pigment particles; and axially rotating the inner cylindrical surface, thereby inducing a repeated avalanching of the polarized pigment particles that agglomerates the polarized pigment particles into pigment pseudoparticles. The term "agglomerating" is used herein to refer to the process of particle size enlargement. Small fine particles are gathered into clusters of particles for use as end product, wherein the clusters are preferably substantially spherical in shape. The term "pigment pseudoparticle" is used herein to refer to friable clusters of pigment particles, and pigment pseudoparticles are characterized as having a density greater than the collection of unagglomerated pigment particles (e.g. the powder). A pigment pseudoparticle is similar to a traditional pellet in the respect that both are comprised of a plurality of particles.

particles" are particulate in nature, nonvolatile in use, and/or typically referred to as inerts, fillers, extenders, etc.

The terms "polarizing", "polarized, etc. generally refers to a shift in the magnitudes and/or spatial positioning of the molecular (and/or particulate) charge densities, thereby creating both (1) a more negatively charged, portion of the molecule (and/or particle) and (2) a more positively charged portion of the molecule (and/or particle). In some aspects, polarizing the pigment particles includes inducing an at least temporary dipole in each of the pigment particles.

Particularly, disclosed herein is a method of forming pigment pseudoparticles from titanium dioxide particles. The method includes passing a flow of pigment particles through a gas within a hollow vessel, thereby inducing an attractive electrostatic force between the pigment particles. The method also includes axially rotating the hollow vessel as flowing occurs, thereby inducing a repeated avalanching of polarized pigment particles that, together with the electrostatic force, agglomerates the charged pigment particles into pigment pseudoparticles. The method preferably comprises axially rotating the hollow vessel as flowing occurs, thereby inducing a scoop attached to an inner surface of the hollow tube to scoop a portion of the pigment particles, axially carry the portion, and dispense the portion into the flow. Preferably, providing the plurality of paddles comprises providing the plurality of paddles positioned along in the inner cylindrical surface in a substantially helical formation. The method also preferably comprises vibrating the inlet feed of the hollow vessel to deaerate the pigment particles.

The apparatus preferably includes means for minimizing adhesion between the inner cylindrical surface and at least one of the pigment particles and the polarized pigment particles.

There are many benefits to agglomerating polarized pigment particles into pigment pseudoparticles. By way of nonlimiting example, these benefits include increased bulk density, decreased packaging size and requirements, improved flow, reduced lumping and caking, increased control of flow rate, reduced dusting, composition uniformity, consistent size and shape, easy metering, increased dispersability (even after exposure during storage to high temperatures and humidity), consistent product performance and decreased internal and surface dust.

These and other features and objects of the invention will be more fully understood from the following detailed description of the preferred embodiments, which should be read in light of the accompanying drawings.

### Brief Description of the Drawings

The accompanying drawings, which are incorporated in and form a part of the specification, illustrate the embodiments, of the present invention and, together with the description serve to explain the principles of the invention. In the drawings:
Fig. 1 is a flow diagram showing an embodiment of a process utilizing a rotary cylinder agglomerator;
Fig. 2 is a cross-sectional right side view drawing showing an embodiment of the rotary cylinder agglomerator;
Fig. 3 is cross-sectional left side view drawing showing another embodiment of the rotary cylinder agglomerator;
Fig. 4a is a cross-sectional front side view drawing showing the embodiment of the rotary cylinder agglomerator of Figure 3 taken along line A-A;
Fig. 4b is an expanded cross-sectional front side view drawing showing the embodiment of the rotary cylinder agglomerator of Figure 3 taken along line A-A;
Fig. 5a is a top view drawing showing an embodiment of a paddle;
Fig. 5b is a front side view drawing showing the embodiment of the paddle shown in Figure 5a; and
Fig. 6 is a cross-sectional front side view drawing showing an embodiment of a method utilizing the rotary cylinder agglomerator.

### Detailed Description of the Invention

In describing a preferred embodiment of the invention illustrated in the drawings, specific terminology will be used for the sake of clarity. However, the invention is not intended to be limited to the specific terms so selected, and it is to be understood that each specific term includes all technical equivalents which operate in a similar manner to accomplish a similar purpose.

The preferred processing unit, herein referred to as a rotary cylinder agglomerator and designated generally 150, is designed to agglomerate powdered titanium dioxide particles in the presence of small natural draft airflow having electrostatic charge. The rotary cylinder agglomerator harnesses attractive van der Waal forces to preferably agglomerate all titanium dioxide particles into pseudoparticles that are preferably characterized as being spherical ersatz particles.

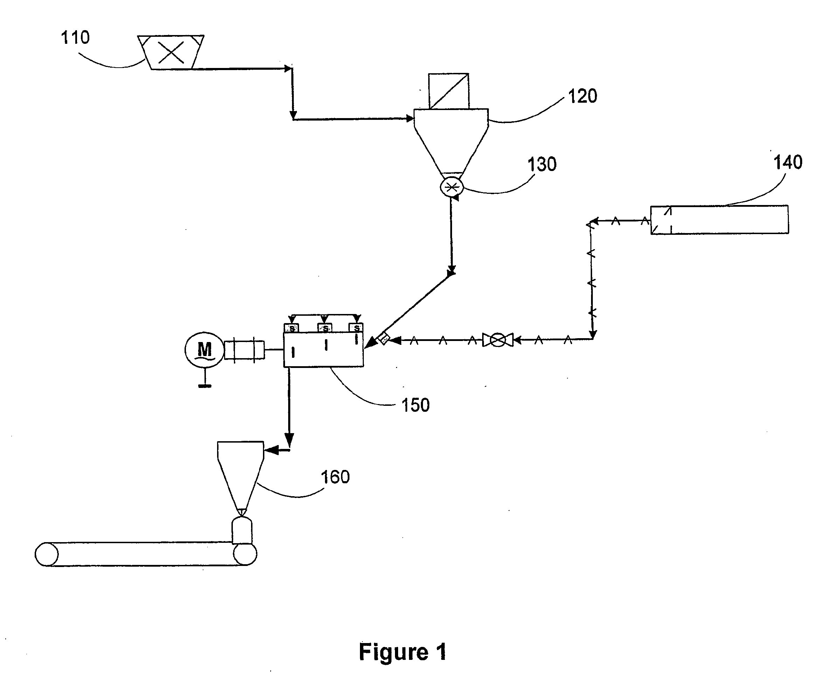

To better understand the preferred chain of manufacturer and with principal reference to Figure 1, an embodiment of a sample manufacturing process is shown utilizing rotary cylinder agglomerator 150. A grinding machine 110 is used to form a powder comprising the pigment particles (e.g. the titanium dioxide particles), which are then stored in feed bin 120. The pigment particles can then be fed into rotary cylinder agglomerator 150 by engaging feed valve 130, which maintains the desired feed rate.

Rotary cylinder agglomerator 150, which is discussed below in further detail, agglomerates the fed pigment particles into larger pseudoparticles bound together by using attractive van der Waal forces. Mechanical binding (e.g. compression) and/or chemical binding (e.g. additives) can be used, but are not required. Part of the agglomeration process discussed below is the vibration of the feed inlet of rotary cylinder agglomerator 150 to deaerate the pigment particles. To this end, a compressor 140 feeds dry air to the feed inlet of rotary cylinder agglomerator 150 to operate the vibration mechanisms that deaerate the pigment particles on rotary cylinder agglomerator 150 and/or inlet feed 205. After the pigment particles are agglomerated into pigment pseudoparticles, the pigment pseudoparticles are conveyed to packing bin 160 where the pigment pseudoparhicles are packaged for transportation.

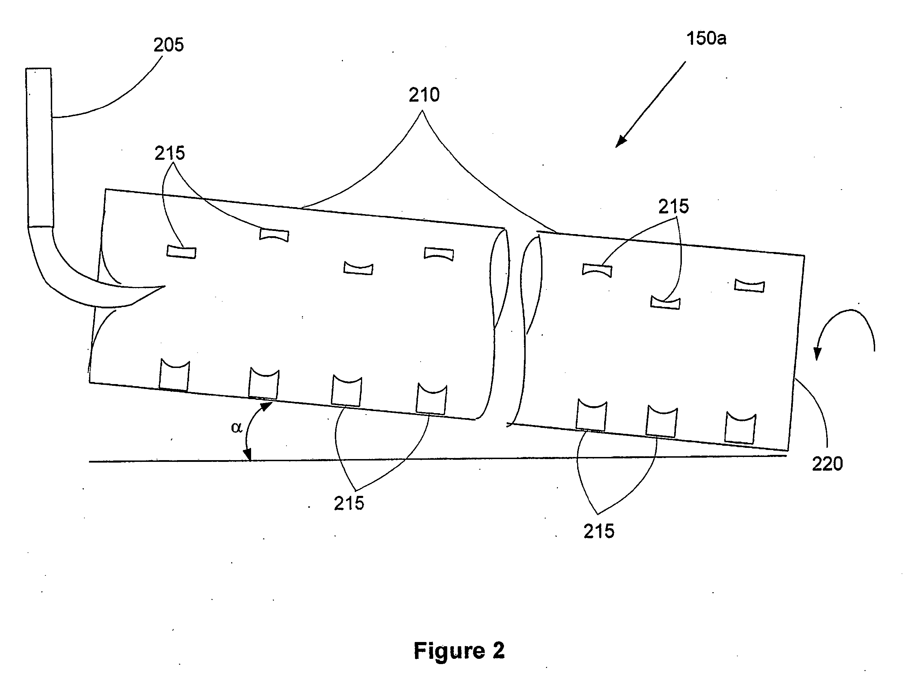

With principal reference to Figure 2, a sample embodiment of a rotary cylinder agglomerator is shown and designated generally 150a. Inlet feed 205 delivers pigment particles from feed bin 120 at a rate controlled by feed valve 130. Rotary cylinder agglomerator 150a comprises a hollow inclined hollow vessel 210 for accepting the pigment particles from inlet feed 205 and that rotates along its central axis. Rotary cylinder agglomerator 150a is preferably inclined at angle of inclination α, which is preferably less than twenty degrees from the horizontal. The inner surface of hollow inclined hollow vessel 210 contains ledges 215. Thus, when the pigment particles are fed into hollow inclined hollow vessel 210, the rotation causes ledges 215 to lift portions of the pigment particle. As hollow inclined hollow vessel 210 continues to rotate, the pigment particles are dispensed from the ledges as a natural result of gravity and fall through the air landing on other pigment particles.

As shown, the ledges have concave curvatures, which increases the efficiency of scooping the pigment particles, as well as increasing the degree to which the pigment is dispersed upon being dispensed from the ledges. The air polarizes the pigment particles and the polarized pigment particles are agglomerated by the further rotation of hollow inclined hollow vessel 210 to form pigment pseudoparticles, such as for example, pigment pellets. The pseudoparticles exit from the outlet 220 of hollow inclined hollow vessel 210.

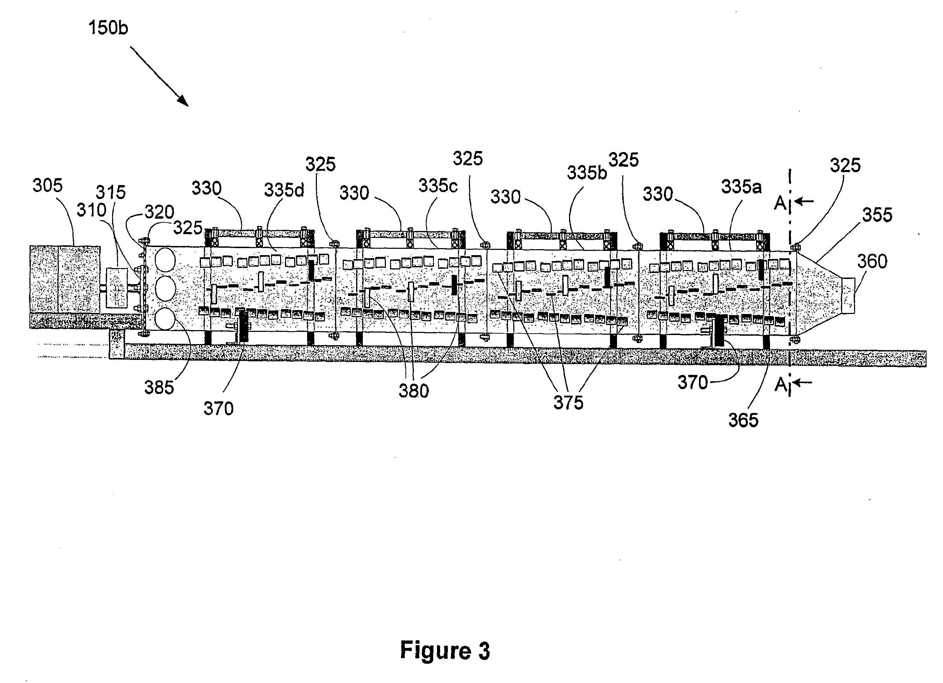

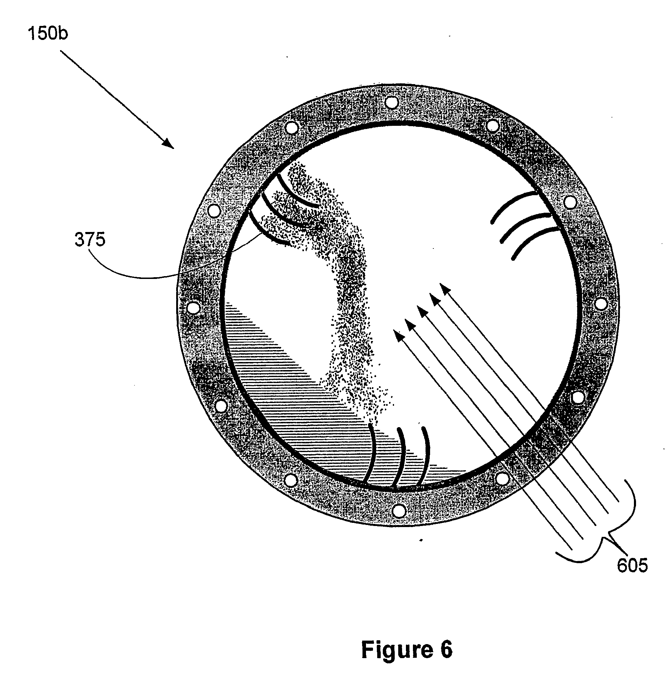

With principal reference to Figure 3 through Figure 5, another sample embodiment of a rotary cylinder agglomerator is designated generally 150b and shall now be discussed in detail. Methods of using embodiments of rotary cylinder agglomerator 150 will primarily be discussed with principle reference to Figure 6.

With principal reference to Figure 3, rotary cylinder agglomerator 150b includes a hollow vessel, which preferably has an inner cylindrical surface and more preferably has an overall cylindrical shape. The hollow vessel is designated generally as 335 and can be of unitary or modular design and of any suitable length. However hollow vessel 335 is preferably modular and is shown as including four zone processing tubes, referenced herein as a first zone processing tube 335a, a second zone processing tube 335b, a third zone processing tube 335c and a fourth zone processing tube 335d. Hollow vessel 335 is capable of rotation along its central longitudinal axis. The processing tubes are preferably attached to each other with flanges 325.

Rotary cylinder agglomerator 150b has a feed inlet 360 and feed cone 355 on an end for receiving pigment particles from feed bin 120 into first zone processing tube 335a. Rotary cylinder agglomerator 150b has discharge ports 385 on the other end for discharging the pigment pseudoparticles from fourth zone processing tube 335d. Hollow vessel 335 is preferably angled with respect to the horizontal (not shown in Figure 3 through Figure 5). The angle of inclination of hollow vessel 335 is preferably equal to up to about ten degrees and more preferably about seven degrees. When inclined, the end having feed inlet 360 and feed cone 360 is higher than the end having discharge ports 385. The angle of inclination can be varied to enhance conveyance of the pigment particles through rotary cylinder agglomerator 150b or to increase retention time in rotary cylinder agglomerator 150b.

Continuing with principal reference to Figure 3, the hollow vessel of rotary cylinder agglomerator 150b is connected to drive means 305, which is preferably a variable speed gear reducer drive, thereby encouraging rotation of hollow vessel 335. Drive means 305 drives the rotation of hollow vessel via coupling means 310, which is preferably a flexible drive coupling. In preferred embodiments, drive means 305 is operably connected to fourth zone processing tube 335d via a drive plates 315 and 320, and flange 325. Rotary cylinder agglomerator 150b preferably comprises frame 365, which supports hollow vessel 335 on trunnions 370 for ease of rotary movement of the hollow vessel. Strikers 330 are also attached to hollow vessel 335 for causing vibrations. This assists in minimizing any adhesion between the inner cylindrical surface and at least one of the pigment particles and the polarized pigment particles. To the extent, if any, that the pigment particles are sticking to the inner cylindrical surface, the vibrations caused by the strikers helps prevent the particles from sticking to the inner cylindrical surface.

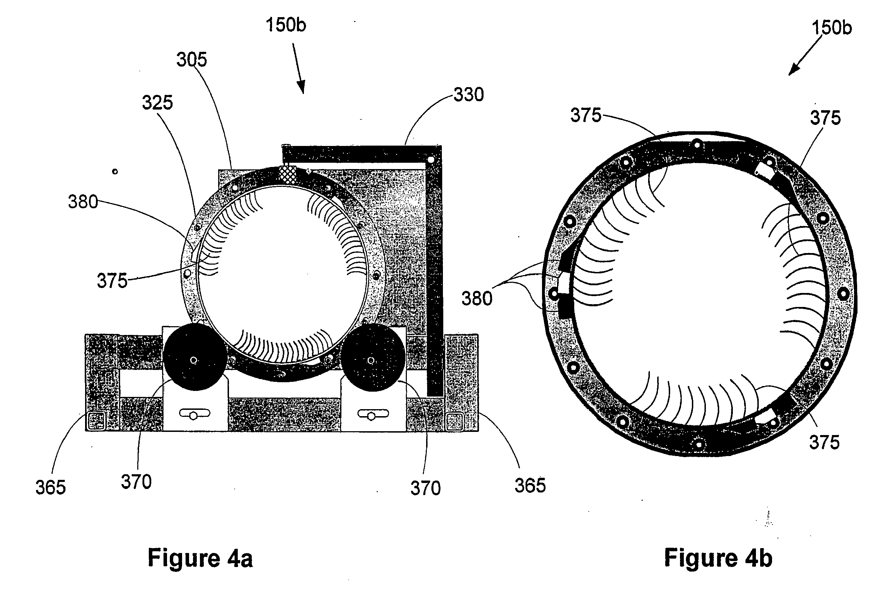

With principal reference to Figure 4a and Figure 4b, the internal structure of hollow vessel 335 preferably contains a plurality of paddles 375. Each of paddles 375 extends inward from the inner cylindrical surface and are preferably grouped together in sets (three sets of paddles 375 are shown in the drawings). Each set of paddles 375 is preferably positioned along the inner cylindrical surface in a substantially helical formation. The internal structure of hollow vessel 335 preferably also contains lifters 380 for actuating strikers 330. The lifters 380 are triggered by the rotation of hollow vessel 335 and are staggered in intervals about the circumference of hollow vessel 335. Thus, the striking action is continuous (so long as rotation is continuous) and periodic (in accordance with the intervals between the lifters). Lifters 380 and strikers 330 are preferably pneumatic, operating from the dry air fed by a compressor, preferably from compressor 140 (shown in Figure 1) that also feeds dry air to feed inlet 205 of rotary cylinder agglomerator 150 to operate the vibration mechanisms that deaerate the pigment particles.

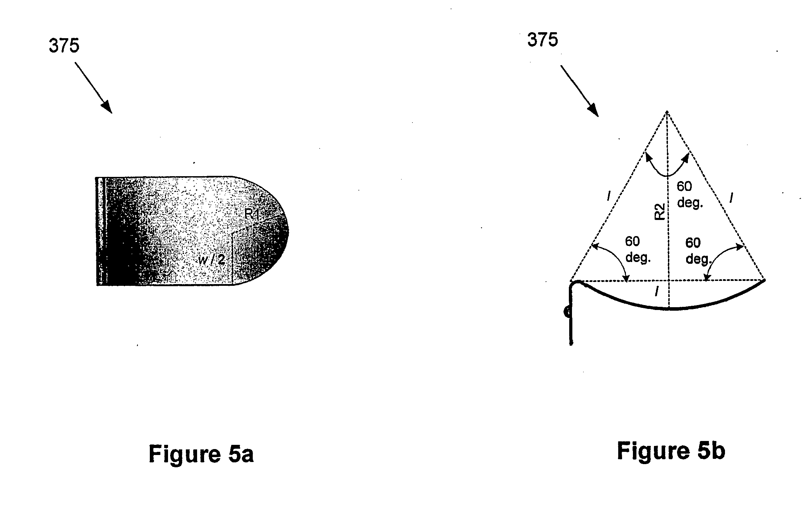

With principal reference to Figures 5a and 5b, the preferred embodiment of paddles 375 will now be discussed. From a top view, Figure 5a shows that the curvature of the paddle end is in relation to the width *w* of paddle 375, with radius R1 preferably equal to half the width *w* of paddle 375. From a front side view, Figure 5b shows that the curvature of the paddle length is proportionate to the linear segment *l* from one end to another of paddle 375. The radius of curvature R2 is preferably defined by measuring the distance from the farthest point of an equilateral triangle having linear segment *l* as one of the triangle's sides. In preferred embodiments, the radius of curvature is thus equal to linear segment *l*.

The structural geometry of any given paddle 375 is carefully designed to maximize the amount of air between the pigment particles as paddle 375 dispenses the pigment particles. During rotation of the inner cylindrical surface (e.g. during rotation of hollow vessel 335), paddles 375 will scoop the pigment particles and then, as rotation continues, dispense the pigment particles as the angle of paddles 375 increases with respect to the ground. As rotation of hollow vessel 335 occurs, the angle of paddle 375 with respect to the ground increases, and gravity begins to pull the pigment particles downward off paddle 375. The spoon-like geometry of paddle 375 takes advantage of the angle of repose associated with the pigment particles, causing more pigment particles to stay with paddle 375 for a longer time as the angle of paddle 375 with respect to the ground changes.

Paddles 375 and the inner cylindrical surface of hollow vessel 335 are preferably comprised of stainless steel so as not to contaminate the pigment pseudoparticles. A lesser grade material may be used such as steel, where iron contamination or contact is not of any meaningful consequence.

With principal reference to Figure 6, preferred embodiments of methods utilizing rotary cylindrical agglomerator 150b will now be discussed. Pigment particles, preferably titanium dioxide are fed into hollow vessel 335 via feed inlet 360. In preferred embodiments, a natural draft 605 is also allowed to pass into hollow vessel 335 at or near feed inlet 360 and to exit via discharge ports 385. In preferred embodiments, the draft is created by the feeding of pigment particles into feed inlet 360 along with a flow of hot air. The pigment particles are urged forward by feed cone 360 and the incline of rotary cylinder agglomerator 150.

The pigment particles then undergo polarization and agglomeration inside hollow vessel 335, wherein a type of pigment particle movement is induced that is ideal for particle size enlargement. The pigment particles are lifted by paddles 375 and then dispensed into the gas (e.g. air) to cascade and coalesce. The pigment particles preferably pass through a natural draft 605 of air as the pigment particles cascade downward, thereby being cooled, and in some cases, thereby becoming charged. Draft 605 has the effect of lowering the temperature of the pigment particles. In some aspects, impact consolidation occurs when the particles land after falling through the gas.

The geometry of paddles 375 promotes the stochastic movement of pigment particles descending inside hollow vessel 335. As the pigment particles fall through the gas, the electron densities of the molecules in the pigment particles shift so as to create dipoles within the molecules and within the pigment particles. The presence of a dipole in each molecule induces heightened van der Waal attraction between the pigment particles. Embodiments of the present invention do not require that the pigment particles be sprayed with a binding agent or other chemical. Instead, embodiments of paddles 375 are preferably designed based on the angle of repose of the pigment particles. The curved end of paddle 375 enhances the distribution at the point of departure before the pigment particles descend. Furthermore, paddles 375 are installed on the inner cylindrical surface of hollow vessel 335 in substantially helical formation to provide, while rotating axially, a continuous uniform falling curtain of titanium dioxide or other pigment particles).

The geometry of paddles 375 increases the surface area and number of pigment particles that are directly exposed to the gas (e.g. air), thereby increasing the number of pigment particles that are polarized from the gas through which the pigment particles move. This is analogous to rain falling through the atmosphere, thereby enhancing the already present natural electrostatic attractions existing in the titanium dioxide or other pigment particles. The polarization of the molecular charge distributions ultimately causes particle coalescence.

The polarized pigment particles fall onto a pile of other pigment particles, including polarized pigment particles and/or yet-to-be-polarized pigment particles. This contact with the pile cushions impact and contributes to consolidation of the powder. As the inner cylindrical surface rotates, the pile climbs up the side of the inner cylindrical surface, ultimately falling upon itself. This avalanching and "snowballing" has the effect of agglomerating the polarized pigment particles to form smooth, substantially-spherically shaped pigment pseudoparticles using without any compression. Tumble growth, avalanching and/or snowballing is one the mechanism of the agglomeration. In tumble growth agglomeration, small particles move irregularly, and randomly collide in a material bed, which causes them to adhere to each other from attractive van der Waal forces exhibited by the pigment particles (especially when the particle size is less than 1 micron). Rotary cylinder agglomerator 150 is designed for this type of agglomeration and densification process.

Aspects of the structure of the pigment pseudoparticle also depends on several other factors, including the amount of deaeration affecting the density of the pile, the height imparted to the pile, the binding mechanism, the processing time, etc. The pile of pigment particles, which has been deaerated, such as in rotary cylinder agglomerator 150, produces a denser, less porous pigment pseudoparticle because particles that have attached themselves to the surface of other particles and are either torn off again or moved to another location on the surface in the contact section of the process. In some embodiments, once pigment pseudoparticle nuclei are formed, the pigment pseudoparticle continue to grow as additional pigment particles become attached again to the surfaces, thus continuing to form agglomerates

In some embodiments, vibrations are applied to rotary cylinder agglomerator 150 to mitigate particle build-up on the internal parts. Particle build up on the walls is eliminated and further densification is accomplished by strikers 330 being actuated by rotating lifters 380, thereby imparting vibrational energy to cause any incipient build up to fall off, and causatively vibrate entrained air from the dry pigment.

The pigment pseudoparticles exit from discharge ports 385 of rotary cylinder agglomerator 150. The resulting pseudoparticles are preferably a +12 to +100 mesh size round smooth bead of insubstantial hardness and visually similar in comparison to table salt, or granulated sugar.

Preferred pigment pseudoparticles are characterized by the fact that the constituent pigment particles are bonded together primarily by an induced level of intermolecular electrostatic attractive force and that pigment pseudoparticle is substantially free of internal dust. Preferred embodiments of the pseudoparticle consist essentially of pigment particles bonded together by an induced level of intermolecular electrostatic attractive force, only a negligible amount of dust being present).

The bonding is preferably van der Waal bonding resulting from an at least temporary dipole-dipole condition in each pigment particle, induced by the presence of an electrostatically charged gas. Van der Waal bonds are typically produced when the electron configuration of the atoms in a molecule losses its symmetrical electron configuration. This polarizes molecules and entire pigment particles of molecules. More pigment particles are preferably polarized than the amount that might naturally occur. The pigment particles may strip electrons from the gas as the pigment particles fall through the gas, thereby charging the pigment particles.

The pigment pseudoparticles are preferably smoothly-discharging, low-dusting, of a higher bulk density and easily dispersible; there is only negligible amounts (if any at all) of rat holing, bridging, caking or solid compaction during storage. This is despite the fact that it is typical in the art that the constituent pigment particles of the pigment pseudoparticle would have been preliminarily subjected to micronizing, such as by grinding (e.g. grinding machine 110), by jet milling, sand milling, hammer milling, etc. Preferred embodiments of the pigment pseudoparticles are useful for coloring foodstuffs, cosmetics, detergents, paint and plastics, inks, elastomers, cement, fly ash, powdered foodstuffs, cement, cosmetics, polytetrafluoroethylene, powders, talc, clay and other suitable mediums to be pigmented.

Pigment pseudoparticles preferably have a greater bulk density (preferably about 20% greater) and lower bulk volume than the pigment particles, thereby reducing packaging requirements. In this respect, more pigment can be stored in a package using pigment pseudoparticles rather than powdered pigment particles, thereby providing cost savings, without the dispersion problems that are usually attendant to conventional pigment pellets. The pigment pseudoparticles preferably have a defined shape, and are particularly suitable for use with metering and feeding devices.

As discussed above, preferred embodiments of the pigment pseudoparticle consist essentially of pigment particles. Chemicals are not required to bind the pigment particles together. Thus, the final product (e.g. the pigment pseudoparticle) is preferably not a composite or other mixture of chemicals and does not possess the characteristic hardness and reduced dispersability common to chemically bound pigment pellet composites. Preferred pseudoparticles are smooth, round, homogenously agglomerated pigment having higher bulk density, reduced dust generation, high free flow ability and dispersibility. The round shape substantially increases the flowability and reduce or eliminate the generation of powder fines or dusts in processing and resists compaction, clumping and ageing in storage and shipment.

Preferred pigment pseudoparticles have minimal adhesion to one another after forming, primarily due to the round shape and the harnessing of van der Waal forces. Thus, when preferred pigment pseudoparticles arrive at their final size, there is no meaningful attractive force with other larger particles. Nevertheless, preferred pigment pseudoparticles retain the beneficial characteristics of extremely high friability and good dispersion, due to the absence of mechanical or chemical binding. The increased density also means that the pigment pseudoparticle, on an equal weight basis, utilizes less volume and less packaging, than a conventional unprocessed pigment, for example.

### Comparative Examples

Certain test trials were conducted and comparative examples are articulated below showing the effective of embodiments of the current invention. Flow was determined by measuring the drain time in seconds from a cylindrical hollow vessel (volume 50 or 100 gm) with a 60 deg. conical base through a defined bore (generally 10 mm). Dust values were assessed as a weight in comparison with the powder weight. The dust characteristics of a powder or pellet may be measured using a Heubach Dustmeter. The fine dust discharged from a rotating drum, through which an air stream flows at a defined rate, is determined gravimetrically on a glass fiber filter. By making measurements after differing exposure times, the dust generation profile may be plotted as a function of mechanical loading. The dust values are assessed as a weight in comparison with the powder. The visual observation of dust on transfer between containers is also used by way of comparison. Dispersion comparisons through a *Brabender Extruder* and into this polymer film are consistent with the unprocessed code standard pigment.

### Comparative Example No. 1

100 parts by weight of finely ground red iron oxide pigment was mixed with the seed pigment of the same with 0.5 to 1.5 parts by total weight of propylene glycol. The mixture was placed in an embodiment of rotary cylinder agglomerator 150 and blended. The process was continued and within about 0.10 - 15 minutes complete pseudoparticle formation occurred, and a smoothly discharging product was obtained.

The increase in bulk density of the processed pigment was about 36%. The angle of repose decreased from 55.6 degrees to 41.6 degrees, a decrease of 25%. The increase in flow rate of the processed powder was from 0.8 grams/second to 5.0 grams/second. The 48-hour compression test of between 4 and 6 psi yielded a completely crumbled pigment discharge upon ejection from rotary cylinder agglomerator 150. The unprocessed pigment was a hard singular mass that did not even fracture upon ejection. The decrease in available dust was about 60%.

### Comparative Example No. 2

100 parts by weight of finely ground, black iron oxide pigment was mixed with the seed pigment of the same with 0.5 to 1 parts by total weight of polydimethylsiloxane, 320cs. The mixture was blended in an embodiment of rotary cylinder agglomerator 150. The process was continued and within about 0.25 - 15 minutes, pseudoparticle formation was complete, and a smoothly discharging product was obtained.

The increase in bulk density of the processed pigment was about 29%. The angle of repose was decreased from 55.6 degrees to 38 degrees, a decrease of 32%. The increase in flow rate of the processed powder was from 0.8 grams/second to 5.0 grams/second. The 48-hour compression test of between 4 and 6 psi yielded a completely crumbled, pigment discharge upon ejection from rotary cylinder agglomerator 150. The unprocessed pigment was a hard singular mass that did not even fracture upon ejection. The decrease in available dust was about 55%.

### Comparative Example No. 3

100 parts by weight of a universal grade rutile titanium dioxide was blended, at temperature, in an embodiment of rotary cylinder agglomerator 150. The process was continued and within about .25-15 minutes pseudoparticle formation was complete, and a smoothly discharging product was obtained.

The increase in bulk density of the processed pigment was about 15%. The angle of repose decreased from 52 degrees to 38.6 degrees, a decrease of about 26%. The increase in flow rate of the processed pigment was from 1.6 grams/second to 6.2 grams/second. The 48-hour compression test of between 4 and 5 psi yielded a completely crumbled, pigment discharge upon ejection from the rotary cylinder agglomerator 150. The unprocessed pigment was a hard singular mass that did not even fracture upon ejection. The decrease in available dust was about 70% and paint dispersion comparisons on the Hegman scale were consistent with unprocessed code standard pigment.

### Comparative Example No. 4

100 parts by weight of a hydrophobic plastics grade rutile titanium dioxide, at temperature, was blended in an embodiment of rotary cylinder agglomerator 150. The process was continued and within about 0.1 - 1 minutes pseudoparticle formation was complete, and a smoothly discharging product was obtained.

The increase in bulk density of the processed pigment was about 16%. The angle of repose decreased from 50.5 degrees to 38.3 degrees, a decrease of about 27%. The increase in flow rate of the processed pigment was from 1.9 grams/second to 8.3 grams/second. The 48-hour compression test of between 4 and 5 psi yielded a completely crumbled, pigment discharge upon ejection from the rotary cylinder agglomerator 150. The unprocessed pigment was a hard singular mass that did not fracture upon ejection. The decrease in available dust was about 80%.

In accordance with preferred embodiments of the invention, a smoothly discharging pigment pseudoparticle consists of spherical faux particles, the pigment pseudoparticle preferably being at least about 90% pigment particles by weight and up to 99.9+% pigment particles by weight. The pseudoparticles are preferably used for the pigmentation of aqueous and/or nonaqueous systems where requirements are low dust, good material flow and accurate metering or feeding properties.

Titanium dioxide particles are the preferred pigment particles. Titanium dioxide particles that can undergo the described process to provide the pseudoparticles, include by way of example and without limitation, any white or colored, opacifying or non-opacifying particulate pigments (or mineral pigments) suitable for the surface coatings (e.g. paint) and/or plastics industries. Titanium dioxide pigment for use in the process of this invention can be either the anatase or rutile crystalline structure or a combination thereof. The pigment may be produced by known commercial processes which are familiar to those of skill in this art but which those processes do not form any part of the present invention. Either the well-known sulfate process or the well-known vapor phase oxidation of titanium tetrachloride process can produce the specific pigment.

Titanium dioxide particles are particularly desired due to the fact that the molecules are extremely cohesive due to high electrostatic charges, the bipolar tendencies of the particle and the high van der Wall forces that are present from the extremely small particle size. These titanium dioxide particles can include anatase and rutile crystalline forms. In addition to utilizing titanium dioxide particles, other pigment particles can be utilized as well, preferably other inorganic oxide pigments such as alumina, magnesia, and zirconia. In some embodiments, pigment particles are preferably less than about one micron in average diameter and, in some embodiments, pigment particles and/or seed particles have average particle sizes of about 0.01 to about 5.0 microns. In some embodiments, the pseudoparticles preferably are spherical agglomerates about 0.01 millimeters in diameter, and in other embodiments, the pseudoparticles are preferably about 0.1 millimeters to about 4 millimeters in diameter.

Embodiments of rotary cylinder agglomerator 150 are specifically designed and optimized for the continuous processing of titanium dioxide particles and other pigment particles to include, by way of nonlimiting example, white opacifying pigments such as, basic carbonate white lead, basic sulfate white lead, basic silicate white lead, zinc sulfide, zinc oxide, composite pigments of zinc sulfide and barium sulfate, antimony oxide and the like, white extender pigments such as calcium carbonate, calcium sulfate, china and kaolin clays, mica, diatomaceous earth and colored pigments such as iron oxide, lead oxide, cadmium sulfide, cadmium selenide, lead chromate, zinc chromate, nickel titanate, chromium oxide, etc.

In some embodiments, the pigment particles may be treated or coated by adding a standard surface treatment to the pigment pseudoparticle. In some embodiments, the surface of the pseudoparticle is post-treated with, for example, one or more oxides or hydroxides of metals. This includes, by way of nonlimiting example, aluminum, antimony, beryllium, cerium, hafnium, lead, magnesium, niobium, silicon, tantalum, titanium, tin, zinc, and/or zirconium. The pigments of titania or other inorganic oxides can contain aluminum, introduced by any suitable method, including co-oxidation of halides of titanium (or other metal) and aluminum as in a chloride process or the addition of aluminum compounds before calcination in a sulphate process.

## Claims

1. A method of forming pigment pseudoparticles from titanium dioxide particles, comprising: providing a hollow vessel having an inner cylindrical surface and containing pigment particles; providing a plurality of paddles that extend inwardly from the inner cylindrical surface; passing a flow of gas through the inner cylindrical surface; axially rotating the inner cylindrical surface, thereby causing the plurality of paddles to lift a portion of the pigment particles; axially rotating the inner cylindrical surface, thereby causing the plurality of paddles to dispense the pigment particles of the dispensed portion being polarized by the gas and landing onto a pile of the pigment particles; and axially rotating the inner cylindrical surface, thereby inducing a repeated avalanching of the polarized pigment particles that agglomerates the polarized pigment particles into pigment pseudoparticles.

2. The method of claim 1, wherein providing the plurality of paddles comprises providing the plurality of paddles positioned along in the inner cylindrical surface in a substantially helical formation.

3. The method of claim 1, comprising vibrating an inlet feed of the hollow vessel to deaerate the pigment particles.

4. An apparatus for inducing electrostatic bonding and agglomeration of pigment particles for carrying out a method according to any of claims 1 to 3: a hollow vessel adapted to be rotated in an axial direction and having an inner cylindrical surface for containing the pigment particles; a plurality of paddles, each of the plurality of paddles comprising an attachment end attached to the inner cylindrical surface, a dispenser end distal the attachment end, and a segment of paddle between the attachment end and the dispenser end, wherein the segment has concave curvature facing the axial direction; a gas within the hollow vessel; and a means for driving rotation of the hollow vessel.

5. The apparatus of claim 4, wherein the attachment end is at least one of being directly attached to the inner cylindrical surface and being attached to the inner cylindrical surface via an intermediate component.

6. The apparatus of claim 4, wherein the hollow cylindrical hollow vessel is modular.

7. The apparatus of claim 4, comprising means for supporting the hollow vessel during rotation.

8. The apparatus of claim 4, wherein the means for supporting the hollow vessel comprises trunnions.

9. The apparatus of claim 4, wherein each of the plurality of paddles are spoon- shaped.

10. The apparatus of claim 4, wherein a radius of curvature of the segment is substantially equal to a linear distance measured from the attachment end to the dispenser end.

11. The apparatus of claim 10, wherein the dispenser end comprises convex curvature having a radius of curvature substantially equal to half the width of the segment.

12. The apparatus of claim 4, comprising means for deaerating the pigment particles.

13. The apparatus of claim 4, comprising means for minimizing adhesion between the inner cylindrical surface and at least one of the pigment particles and the polarized pigment particles.

14. The apparatus of claim 13, wherein the means for minimizing adhesion comprises strikers adapted to strike the hollow vessel thereby causing the hollow vessel to vibrate.

15. The apparatus of claim 14, comprising means for periodically actuating the strikers in association with rotation of the hollow vessel.

16. The apparatus of claim 4, wherein the hollow incline is positioned at an angle with respect to the ground.

17. The apparatus of claim 4, comprising an inlet for receiving the pigment particles and an outlet for discharging agglomerated pigment particles.

18. The apparatus of claim 17, wherein the hollow incline is positioned at an angle with respect to the ground, the inlet being higher than the outlet.

19. The apparatus of claim 18, wherein the angle is no more than about twenty degrees.

20. The apparatus of claim 18, wherein the angle is greater than about zero degrees and wherein the angle is less than about ten degrees.

21. The apparatus of claim 4, wherein the attachment ends of the plurality of paddles are positioned along the inner cylindrical surface in a substantially helical formation.

22. The apparatus of claim 4, wherein the plurality of paddles comprise at least one set of paddles, the attachment ends of each paddle in a set being positioned along the inner cylindrical surface in a substantially helical formation.

23. The apparatus of claim 4, wherein the plurality of paddles comprises a first set of paddles, a second set of paddles and a third set of paddles, wherein the attachment ends of each paddle in the first set are positioned along the inner cylindrical surface in a first substantially helical formation, wherein the attachment ends of each paddle in the second set are positioned along the inner cylindrical surface in a second substantially helical formation, and wherein the attachment ends of each paddle in the third set are positioned along the inner cylindrical surface in a third substantially helical formation.

## Patentansprüche

1. Verfahren zur Bildung von Pigmentpseudopartikeln aus Titandioxidpartikeln, umfassend: Bereitstellen eines Hohlgefäßes mit einer inneren zylinderförmigen Oberfläche und enthaltend Pigmentpartikel; Bereitstellen einer Vielzahl von Schaufeln, welche sich nach Innen aus der inneren zylinderförmigen Oberfläche erstrecken; Führen eines Gasflusses durch die innere zylinderförmige Oberfläche; axiales Rotieren der inneren zylinderförmigen Oberfläche, wodurch die Vielzahl von Schaufeln ein Anhebe eines Teils der Pigmentpartikel verursachen; axiales Rotieren der inneren zylinderförmigen Oberfläche, wodurch die Vielzahl von Schaufeln ein Verteilen der Pigmentpartikel des dispensierten Teils, polarisiert durch das Gas und landend auf einem Haufen der Pigmentpartikel, verursachen; und axiales Rotieren der inneren zylinderförmigen Oberfläche, wodurch ein wiederholtes Wachstum der polarisierten Pigmentpartikel, welches die polarisierten Pigmentpartikel zu Pigmentpseudopartikeln agglomeriert, herbeigeführt wird.

2. Verfahren nach Anspruch 1, wobei das Bereitstellen der Vielzahl von Schaufeln ein Bereitstellen der Vielzahl von Schaufeln, welche entlang der inneren zylinderförmigen Oberfläche in einer im Wesentlichen spiralförmigen Anordnung positioniert sind, umfasst.

3. Verfahren nach Anspruch 1, umfassend Vibrieren eines Einlasses des Hohlgefäßes, um die Pigmentpartikel zu entlüften.

4. Vorrichtung zum Herbeiführen von elektrostatischem Binden und Agglomerieren von Pigmentpartikeln, um ein Verfahren nach einem der Ansprüche 1 bis 3 durchzuführen: ein Hohlgefäß, welches geeignet ist, um in einer axialen Richtung rotiert zu werden, und mit einer inneren zylinderförmigen Oberfläche, um die Pigmentpartikel zu enthalten; eine Vielzahl von Schaufeln, wobei jede der Vielzahl von Schaufeln ein Befestigungsende, welches an die innere zylinderförmige Oberfläche befestigt ist, ein Verteilerende distal zu dem Befestigungsende, und ein Segment der Schaufel zwischen dem Befestigungsende und dem Verteilerende umfasst, wobei das Segment eine konkave Krümmung zugewandt der Achsenrichtung hat; ein Gas innerhalb des Hohlgefäßes; und Hilfsmittel zum Antreiben der Rotation des Hohlgefäßes.

5. Vorrichtung nach Anspruch 4, wobei das Befestigungsende mindestens eines aus einem, welches direkt an der inneren zylinderförmigen Oberfläche befestigt ist, und einem, welches an die innere zylinderförmige Oberfläche über eine Zwischenkomponente befestigt ist, ist.

6. Verfahren nach Anspruch 4, wobei das hohle zylinderförmige Hohlgefäß modular ist.

7. Vorrichtung nach Anspruch 4, umfassend Hilfsmittel zur Unterstützung des Hohlgefäßes während der Rotation.

8. Vorrichtung nach Anspruch 4, wobei die Hilfsmittel zur Unterstützung des Hohlgefäßes Zapfen umfassen.

9. Vorrichtung nach Anspruch 4, wobei jede der Vielzahl von Schaufeln löffelförmig ist.

10. Vorrichtung nach Anspruch 4, wobei ein Radius der Krümmung des Segmentes im Wesentlichen gleich zu einem linearen Abstand, welcher von dem Befestigungsende zu dem Verteilerende gemessen wird, ist.

11. Vorrichtung nach Anspruch 10, wobei das Verteilerende eine konvexe Krümmung mit einem Radius der Krümmung im Wesentlichen gleich zu der Hälfte der Breite des Segmentes umfasst.

12. Vorrichtung nach Anspruch 4, umfassend Hilfsmittel zum Entlüften der Pigmentpartikel.

13. Vorrichtung nach Anspruch 4, umfassend Hilfsmittel zum Minimieren der Adhäsion zwischen der inneren zylinderförmigen Oberfläche und mindestens einem aus den Pigmentpartikeln und den polarisierten Pigmentpartikeln.

14. Vorrichtung nach Anspruch 13, wobei die Hilfsmittel zum Minimieren der Adhäsion Schlagstücke umfassen, welche zum Schlagen des Hohlgefäßes geeignet sind, wodurch ein Vibrieren des Hohlgefäßes verursacht wird.

15. Vorrichtung nach Anspruch 14, umfassend Hilfsmittel zum periodischen Auslösen der Schlagstücke in Verbindung mit der Rotation des Hohlgefäßes.

16. Vorrichtung nach Anspruch 4, wobei die Hohlraumneigung in einem Winkel in Bezug zu dem Boden positioniert ist.

17. Vorrichtung nach Anspruch 4, umfassend einen Einlass zur Aufnahme der Pigmentpartikel und einen Auslass zur Abgabe der agglomerierten Pigmentpartikel.

18. Vorrichtung nach Anspruch 17, wobei die Hohlraumneigung in einem Winkel in Bezug auf den Boden positioniert ist, wobei der Einlass höher als der Auslass ist.

19. Vorrichtung nach Anspruch 18, wobei der Winkel nicht mehr als etwa zwanzig Grad ist.

20. Verfahren nach Anspruch 18, wobei der Winkel größer als etwa null Grad ist und wobei der Winkel weniger als etwa zehn Grad ist.

21. Vorrichtung nach Anspruch 4, wobei die Befestigungsenden der Vielzahl von Schaufeln entlang der inneren zylinderförmigen Oberfläche in einer im Wesentlichen spiralförmigen Anordnung positioniert sind.

22. Vorrichtung nach Anspruch 4, wobei die Vielzahl von Schaufeln mindestens einen Satz von Schaufeln umfassen, wobei die Befestigungsenden jeder Schaufel in einem Satz, welcher entlang der inneren zylinderförmigen Oberfläche in einer im Wesentlichen spiralförmigen Anordnung positioniert sind.

23. Vorrichtung nach Anspruch 4, wobei die Vielzahl von Schaufeln einen ersten Satz von Schaufeln, einen zweiten Satz von Schaufeln und einen dritten Satz von Schaufeln umfassen, wobei die Befestigungsenden jeder Schaufel in dem ersten Satz entlang der inneren zylinderförmigen Oberfläche in einer ersten im Wesentlichen spiralförmigen Anordnung positioniert sind, wobei die Befestigungsenden jede Schaufel in dem zweiten Satz entlang der inneren zylinderförmigen Oberfläche in einer zweiten im Wesentlichen spiralförmigen Anordnung positioniert sind, und wobei die Befestigungsenden jede Schaufel in dem dritten Satz entlang der inneren zylinderförmigen Oberfläche in einer dritten im Wesentlichen spiralförmigen Anordnung positioniert sind.

## Revendications

1. Procédé de formation de pseudoparticules de pigment à partir de particules de dioxyde de titane, comprenant : la fourniture d'un récipient creux ayant une surface cylindrique interne et contenant des particules de pigment ; la fourniture d'une pluralité de palettes qui s'étendent vers l'intérieur à partir de la surface cylindrique interne ; le passage d'un flux de gaz à travers la surface cylindrique interne ; la rotation axiale de la surface cylindrique interne, entraînant ainsi la pluralité de palettes à soulever une partie des particules de pigment ; la rotation axiale de la surface cylindrique interne, entraînant ainsi la pluralité de palettes à distribuer les particules de pigment de la partie distribuée étant polarisée par le gaz et atterrissant sur une pile des particules de pigment, et la rotation axiale de la surface cylindrique interne, provoquant ainsi une avalanche répétée des particules de pigment polarisées qui agglomère les particules de pigment polarisées en pseudoparticules de pigment.

2. Procédé selon la revendication 1, dans lequel la fourniture de la pluralité de palettes comprend le positionnement de la pluralité de palettes le long de la surface cylindrique interne en une formation sensiblement hélicoïdale.

3. Procédé selon la revendication 1, comprenant la mise en vibration d'une charge d'entrée du récipient creux pour désaérer les particules de pigment.

4. Appareil destiné à induire une liaison et agglomération électrostatique de particules de pigment pour mettre en oeuvre un procédé selon l'une quelconque des revendications 1 à 3, comprenant : un récipient creux conçu pour être mis en rotation dans une direction axiale et ayant une surface cylindrique interne pour contenir les particules de pigment ; une pluralité de palettes, chacune de la pluralité de palettes comprenant une extrémité d'attachement attachée à la surface cylindrique interne, une extrémité de distribution distale de l'extrémité d'attachement, et un segment de palette entre l'extrémité d'attachement et l'extrémité de distribution, le segment ayant une courbure concave faisant face à la direction axiale ; un gaz à l'intérieur du récipient creux ; et des moyens pour entraîner la rotation du récipient creux.

5. Appareil selon la revendication 4, dans lequel l'extrémité d'attachement est au moins l'une d'une étant attachée directement à la surface cylindrique interne et d'une étant attachée à la surface cylindrique interne via un composant intermédiaire.

6. Appareil selon la revendication 4, dans lequel le récipient creux cylindrique est modulaire.

7. Appareil selon la revendication 4, comprenant des moyens pour supporter le récipient creux lors de la rotation.

8. Appareil selon la revendication 4, dans lequel les moyens pour supporter le récipient creux comprennent des tourillons.

9. Appareil selon la revendication 4, dans lequel chacune de la pluralité de palettes est en forme de cuillère.

10. Appareil selon la revendication 4, dans lequel un rayon de courbure du segment est sensiblement égal à une distance linéaire mesurée de l'extrémité d'attachement à l'extrémité de distribution.

11. Appareil selon la revendication 10, dans lequel l'extrémité de distribution comprend une courbure convexe ayant un rayon de courbure sensiblement égal à la moitié de la largeur du segment.

12. Appareil selon la revendication 4, comprenant des moyens pour désaérer les particules de pigment.

13. Appareil selon la revendication 4, comprenant des moyens pour minimiser l'adhérence entre la surface cylindrique interne et au moins une des particules de pigment et des particules de pigment polarisées.

14. Appareil selon la revendication 13, dans lequel les moyens pour minimiser l'adhérence comprennent des percuteurs conçus pour percuter le récipient creux, entraînant ainsi la vibration du récipient creux.

15. Appareil selon la revendication 14, comprenant des moyens pour actionner périodiquement les percuteurs en association avec la rotation du récipient creux.

16. Appareil selon la revendication 4, dans lequel le plan incliné creux est positionné à un angle par rapport au sol.

17. Appareil selon la revendication 4, comprenant une entrée pour recevoir les particules de pigment et une sortie pour décharger les particules de pigment agglomérées.

18. Appareil selon la revendication 17, dans lequel le plan incliné creux est positionné à un angle par rapport au sol, l'entrée étant plus haute que la sortie.

19. Appareil selon la revendication 18, dans lequel l'angle ne fait pas plus d'environ vingt degrés.

20. Appareil selon la revendication 18, dans lequel l'angle est supérieur à environ zéro degré et dans lequel l'angle est inférieur à environ dix degrés.

21. Appareil selon la revendication 4, dans lequel les extrémités d'attachement de la pluralité de palettes sont positionnées le long de la surface cylindrique interne en une formation sensiblement hélicoïdale.

22. Appareil selon la revendication 4, dans lequel la pluralité de palettes comprend au moins un ensemble de palettes, les extrémités d'attachement de chaque palette dans un ensemble étant positionnées le long de la surface cylindrique interne en une formation sensiblement hélicoïdale.

23. Appareil selon la revendication 4, dans lequel la pluralité de palettes comprend un premier ensemble de palettes, un deuxième ensemble de palettes et un troisième ensemble de palettes, dans lequel les extrémités d'attachement de chaque palette dans le premier ensemble sont positionnées le long de la surface cylindrique interne en une première formation sensiblement hélicoïdale, dans lequel les extrémités d'attachement de chaque palette dans le deuxième ensemble sont positionnées le long de la surface cylindrique interne en une deuxième formation sensiblement hélicoïdale, et dans lequel les extrémités d'attachement de chaque palette dans le troisième ensemble sont positionnées le long de la surface cylindrique interne en une troisième formation sensiblement hélicoïdale.
